Europäisches Patentamt

European Patent Office

Office européen des brevets

(19)

(11) Numéro de publication: **0 279 245 B1**

(12) **FASCICULE DE BREVET EUROPEEN**

(45) Date de publication de fascicule du brevet:
13.11.91

(51) Int. Cl.⁵: **B61D 17/20**, B60D 5/00,
B62D 47/02

(21) Numéro de dépôt: **88101233.0**

(22) Date de dépôt: **28.01.88**

(54) **Dispositif de liaison entre deux véhicules ferroviaires.**

(30) Priorité: 30.01.87 FR 8701163
29.12.87 FR 8718292
12.01.88 FR 8800265

(43) Date de publication de la demande:
24.08.88 Bulletin 88/34

(45) Mention de la délivrance du brevet:
13.11.91 Bulletin 91/46

(84) Etats contractants désignés:
BE CH DE FR GB IT LI NL

(56) Documents cités:
EP-A- 0 121 503          DE-A- 2 908 354
DE-B- 1 051 892          DE-C- 528 157
DE-C- 966 430            DE-C- 969 100
FR-A- 2 581 016          GB-A- 2 063 802
US-A- 3 030 897

(73) Titulaire: **GEC ALSTHOM SA**
**38, avenue Kléber**
**F-75116 Paris(FR)**

(72) Inventeur: **Cros, Michel**
**"Casse Fève" La Jarne**
**F-17220 La Jarrie(FR)**
Inventeur: **Grimonprez, Alain**
**31 rue Gabriel Rondeau La Jarne**
**F-17220 La Jarrie(FR)**

(74) Mandataire: **Weinmiller, Jürgen et al**
**Lennéstrasse 9 Postfach 24**
**W-8133 Feldafing(DE)**

## Description

La présente invention concerne un dispositif de liaison entre entre deux véhicules ferroviaires autorisant des mouvements relatifs de rotation d'axe vertical et d'axe horizontal entre les caisses des véhicules, et définissant un compartiment d'intercirculation d'une caisse à l'autre, comportant deux éléments reliés par une liaison souple, chaque élément s'articulant vis-à-vis de la caisse adjacente autour d'un axe vertical commun avec celle-ci, étant exempt de bogie porteur, et s'articulant avec l'autre élément et avec la caisse correspondante grâce à une rotule en partie haute et à un secteur convexe en extrémité de caisse glissant à l'intérieur d'un secteur concave de l'extrémité de l'élément.

Un tel dispositif est destiné à assurer le passage des voyageurs entre deux véhicules contigus d'une rame ferroviaire. Il doit être démontable et permettre la séparation des deux véhicules entre lesquels il est disposé. Il doit également permettre le libre débattement des véhicules lors de leur circulation sur les courbes (avec ou sans prise de dévers), lors de leur passage dans un tronçon de voie en creux et bosse, et lors des mouvements relatifs d'une caisse de véhicule par rapport à l'autre, et cela quel que soit l'état de chargement des différents véhicules.

Le document FR-A-2581016 porte sur un dispositif de liaison de ce genre, formé par un caisson composé de longerons longitudinaux pour le passage des roues et des longerons d'un bogie-porteur, et d'un plancher situé environ au niveau de l'axe des roues. Les deux éléments s'articulent autour d'une charnière d'axe horizontal commun. Chacun d'eux comporte un pivot d'axe vertical sur lequel vient s'articuler une caisse adjacente. Un autre pivot de même axe vertical relie en partie supérieure un longeron d'un élément et un longeron de la caisse adjacente.

Un tel dispositif implique une certaine superposition des structures de planchers et de couvrejoints d'un élément et de la caisse en regard. Du fait de la présence du bogie-porteur, le passage dans le dispositif d'une caisse à l'autre ne peut être à un niveau bas que dans la zone centrale, entre les roues du bogie.

Le Doc. US-A-3030897 présente également un dispositif de liaison entre véhicules ferroviaires, conformément au préambule de la Revendication 1, où aucun bogie porteur n'est utilisé.

La présente invention a pour but de procurer un dispositif de liaison entre deux véhicules ferroviaires qui évite la superposition de structures entre ses éléments et les caisses qu'il raccorde, qui soit de ce fait plus léger que les dispositifs connus, dont le plancher puisse être à un niveau bas sur toute sa largeur, et qui soit de fabrication facile, impliquant un minimum d'usinages.

Le dispositif selon l'invention est caractérisé en ce que l'élément est supporté par le secteur convexe-concave en partie basse, se trouvant alors guidé par la rotule en partie haute, qui comporte un jeu vertical d'adaptation en hauteur, ou bien est supporté par la rotule en partie haute, dont la position vertical est fixe, se trouvant guidé en partie basse par le secteur convexe-concave. Il répond en outre de préférence à au moins l'une des caractéristiques ci-dessous :

- Le secteur convexe en extrémité de châssis de la caisse et le secteur concave correspondant de l'élément sont reliés par un secteur à queue d'aronde cintrée, à roulement à billes, à rouleaux ou à patins à frottement doux.
- Les ossatures des éléments sont rigides, et dans le prolongement des caisses en alignement.
- Les deux caisses sont accouplées par un coupleur élastique réunissant deux parties d'une barre d'attelage, et assurant une translation dans le plan longitudinal et une rotation dans le plan transversal.
- Le compartiment d'intercirculation, constitué par deux éléments couplés par un soufflet, comporte, au droit du soufflet, un garnissage gauchissable intérieur constitué par deux panneaux de face, un sur chaque côté du compartiment, et un panneau de plafond déformable, lesdits panneaux de face et ledit panneau de plafond masquant ledit soufflet et étant fixés de manière élastique à chacun des deux éléments du compartiment.
- La liaison souple des deux éléments d'intercirculation comprend des plaques rectangulaires de tôle métallique juxtaposées dans le sens transversal à l'axe du dispositif, reposant par l'intermédiaire d'une bande en élastomère sur une barre transversale, et cette barre transversale est supportée sous les plaques de tôle métallique extrêmes par l'intermédiaire de plots en élastomère par une traverse, elle-même supportée sur ses bords par des équerres métalliques solidarisées avec les bords des éléments d'intercirculation.
- Le support de la traverse sur ses bords par les équerres métalliques est assuré par l'intermédiaire de plots en élastomère.
- Chaque plaque rectangulaire repose sur ses bords adjacents aux bords des éléments d'intercirculation sur des patins fixés à des ailes métalliques solidarisées avec les bords des éléments d'intercirculation.
- La barre tranversale est reliée de façon étanche aux bords adjacents des ailes métalliques par une toile.

- La traverse présente une partie centrale en creux et des rebords relevés.

Il est décrit ci-après, à titre d'exemple et en référence aux figures schématiques du dessin annexé, des dispositifs de liaison entre deux voitures d'une rame de chemin de fer selon l'invention.

La figure 1 représente en plan au niveau des planchers le dispositif lors d'un passage d'aiguillage.

La figure 2 représente le même dispositif dans des courbes de la voie, le supportage des éléments étant assuré par les secteurs des planchers des caisses.

La figure 3 représente en élévation un dispositif à guidage des éléments par le haut.

La figure 4 représente en coupe une liaison entre un élément et la caisse correspondante par une queue d'aronde cintrée.

La figure 5 représente en coupe une liaison entre un élément et la caisse correspondante par chemin de roulement à billes.

La figure 6 représente en coupe une autre liaison par chemin de roulement à billes.

La figure 7 représente en coupe une liaison par chemin de roulement à rouleaux.

- La figure 8 est une vue en perspective de la partie centrale d'un compartiment d'intercirculation comportant un garnissage de l'invention.
- La figure 9 est une vue schématique de dessus et en coupe du compartiment d'intercirculation.
- La figure 10 est une vue du compartiment d'intercirculation selon la coupe X-X de la figure 9.
- La figure 11 est une coupe partielle du garnissage selon la coupe XI-XI de la figure 2.
- La figure 12 représente le détail XII de la figure 11.
- La figure 13 représente le détail XIII de la figure 11.
- La figure 14 est une coupe partielle selon l'axe XIV-XIV de la figure 13.
- La figure 15 représente une variante du panneau de face dans la même vue en coupe partielle que la figure 11.
- La figure 16 représente à une échelle agrandie le panneau de plafond de la figure 11.
- La figure 17 est une vue partielle, en coupe, selon l'axe XVII-XVII de la figure 16.
- La figure 18 représente à une échelle réduite, une vue d'ensemble du panneau de plafond selon l'axe de coupe XVIII-XVIII de la figure 16.
- La figure 19 représente en plan l'ensemble d'un dispositif à liaison souple des éléments d'intercirculation comprenant des plaques rectangulaires de tôles métalliques.
- La figure 20 représente en plan avec arrachement partiel les plaques rectangulaires assurant le liaison entre les deux éléments d'intercirculation et leurs organes de support.
- La figure 21 représente une coupe partielle selon l'axe XXI-XXI de la figure 20.
- Les figures 22, 23 et 24 sont des coupes selon les axes XXII-XXII, XXIII-XXIII et XXIV-XXIV de la figure 21.
- La figure 25 est une coupe selon l'axe XXV-XXV de la figure 20.

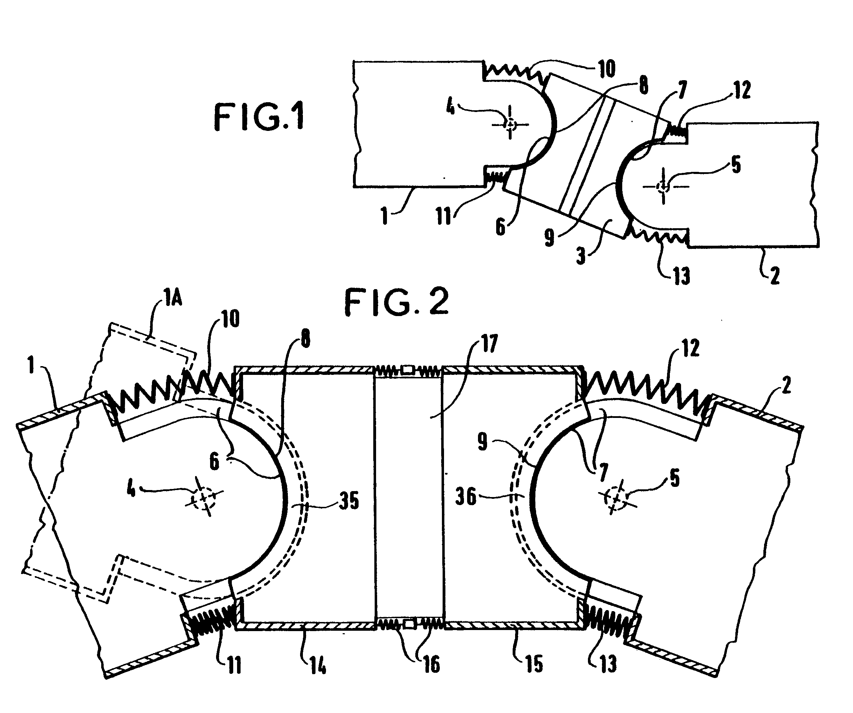

Dans les figures 1 et 2, le dispositif de liaison 3 relie les caisses de voitures 1 et 2. Son pivotement vis-à-vis de ces caisses s'effectue autour des axes verticaux 4 et 5. Les extrémités des caisses comportent des secteurs convexes 6, 7 et celles du dispositif de liaison des secteurs concaves correspondants 8, 9. Les bords du dispositif de liaison sont raccordés aux bords des caisses des voitures par des soufflets d'étanchéité 10, 11, 12, 13. Il est disposé entre les secteurs concaves et les secteurs convexes des moyens facilitant la rotation des uns par rapport aux autres, par exemple des roulements à billes, à rouleaux, des galets ou des patins de frottement, d'un genre connu, non représentés.

Le dispositif 3 se compose de deux éléments 14, 15 (fig.2) couplés par une jonction de raccordement à soufflet 16 sur les côtés et le pavillon, et à plancher semi-souple 17.

La figure 1 représente les positions relatives de dispositif de liaison et des extrémités des caisses au passage d'un court tronçon de voie curviligne, tel qu'un aiguillage. La figure 2 représente ces positions relatives en courbe (caisse 1 représentée en trait fort) et en contre-courbe (caisse 1A représentée en trait discontinu).

Le guidage parfait de chaque élément du dispositif de liaison autour d'une rotule supérieure (non représentée sur ces figures) et d'un secteur d'extrémité de caisse tel que 6 or 7 permet de donner aux éléments de ce dispositif une ossature rigide, évitant tout balancement ou déplacement longitudinal. Le très faible jeu dans le plan horizontal entre les secteurs convexes 6, 7 des extrémités des caisses et les secteurs concaves 8, 9 des éléments du dispositif de liaison supprime des efforts anormaux ou vibrations éventuelles sur la barre d'attelage des voitures entre elles. La grande largeur de passage assurée dans ces éléments permet d'augmenter l'angle de vision d'une voiture de voyageurs à l'autre. Par ailleurs, comme le montrent les figures, le déport au coin extrême d'une voiture (déport à la corne) est réduit, ce qui assure une meilleure inscription en courbe des rames et permet d'élargir la voiture au maximum permis par le gabarit. Le débattement des soufflets d'étanchéité et des volets de protection s'effectue dans des plans longitudinaux, parallèles aux faces des caisses. On conserve ainsi une largeur de passage sensiblement équivalente en courbe extrême à la largeur en alignement.

Comme ce débattement s'effectue uniquement en traction et compression, les faces et le pavillon des caisses ne sont pas sollicités lors du fonctionnement du soufflet et des volets du dispositif de liaison.

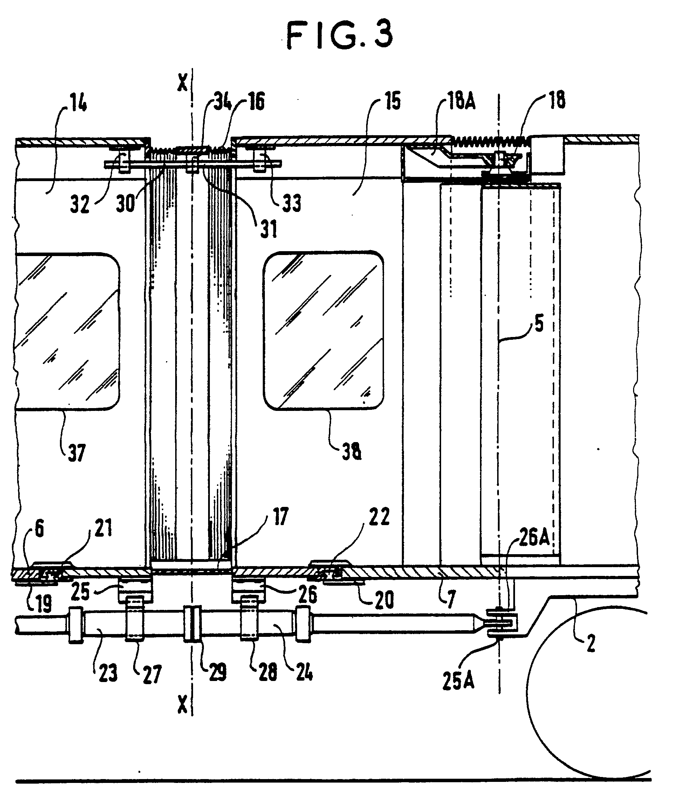

La figure 3 représente en élévation un dispositif à support des éléments par le haut. Ces éléments 14 et 15 sont reliés par la soufflet 16 et l'élément de plancher semi-souple 17. Ils sont symétriques par rapport à l'axe de découplement XX.

Chaque élément est guidé en partie haute par une rotule à ajustement vertical 18, disposée sur l'axe vertical de rotation 5, et supportant le déversement de l'élément correspondant par l'intermédiaire du bras 18A. Sous le plancher, la barre de traction 24 est reliée à la caisse 2 de la voiture adjacente par un axe 25 A pivotant dans un étrier 26A.

Les secteurs convexes 6 et 7 des caisses 1 et 2 comportent des chemins de support 19, 20 pour des liaisons à queue d'aronde cintrée 21, 22. Les éléments 14, 15 sont entraînés en rotation par la barre d'attelage 23, 24 et guidés par des mortaises 25, 26 dans lesquelles s'engagent avec liberté de translation axiale des tenons 27, 28 fixés en forme de cavaliers sur la barre d'attelage. Les deux parties de cette barre sont réunies par un coupleur élastique 29 permettant la translation longitudinale et une certaine rotation relative dans le plan transversal.

Des bielles (non représentées) relient chacun des parties de la barre de traction, de part et d'autre de celle-ci, aux bogies des extrémités des caisses.

Dans la partie supérieure, les soufflets 16 sont supportés par une tige 30, 31 prenant appui dans un palier coulissant 32, 33, avec une rotule centrale 34.

Dans la variante à support des éléments du dispositif de liaison, les rotules telles que 18 ne servent que d'organe de guidage, les extrémités des secteurs concaves 8, 9 du dispositif de liaison comportent chacune un rebord venant en appui sur le rebord correspondant 6, 7 du secteur convexe d'extrémité de la caisse adjacente, au-delà de l'intervalle occupé par un roulement ou des patins de frottement doux (rebords 35, 36 représentés sur la figure 2).

Pour assurer une meilleure visibilité, les deux éléments du dispositif de liaison peuvent être munis de fenêtres 37, 38.

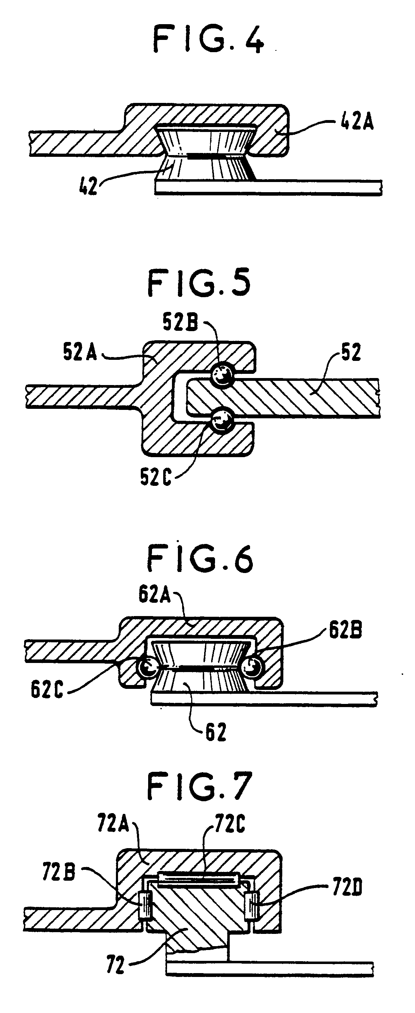

La liaison avec possibilité de rotation des secteurs convexes des extrémités de caisse dans les secteurs concaves des éléments du dispositif de liaison peut être assurée par les différents organes représentés dans les figures 4 à 7.

La figure 4 représente une liaison par queue d'aronde cintrée entre le secteur 42 solidaire de la caisse et le secteur 42A solidaire de l'élément en vis-à-vis, entre lesquels sont interposés, soit des plaques de frottement, soit des rouleaux, soit des billes (non représentés).

Les liaison des figures 5, 6, 7 sont adaptées à un dispositif de supportage par le bas.

Dans la figure 5, la liaison est assurée par un chemin de roulement à billes entre le secteur 52 solidaire de la caisse et le secteur 52A solidaire de l'élément correspondant, les billes 52B, 52C étant dans les gorges superposées verticalement.

Dans la figure 6, le chemin de roulement comporte deux trains de billes 62B, 62C entre les secteurs 62 et 62A.

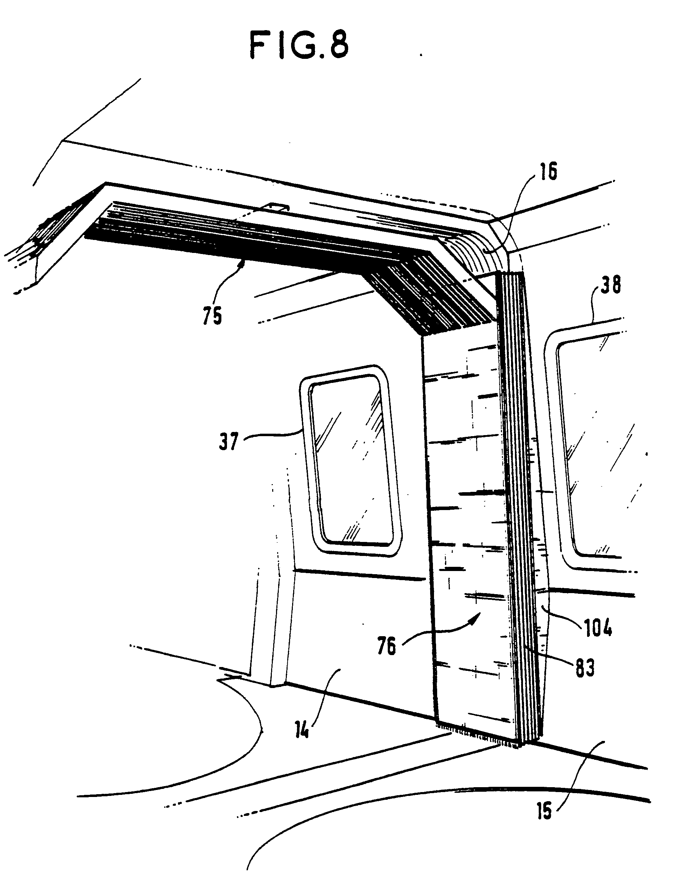

En figure 7, le chemin de roulement comporte des rouleaux 72B, 72C, 72D entre les secteurs 72 et 72A.

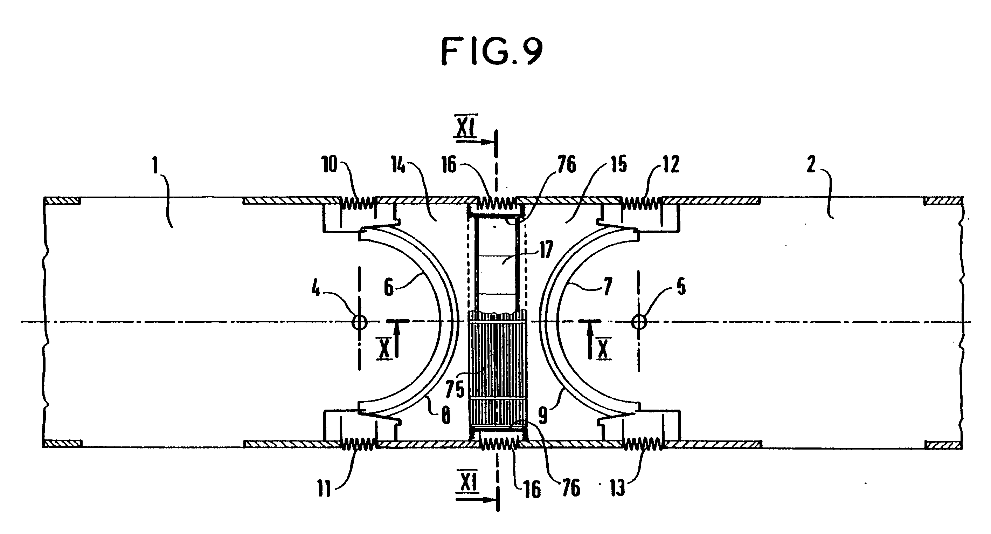

Dans les figures 8 et 9 qui représentent le compartiment d'intercirculation constitué de deux éléments 14 et 15 couplés par un jonction de raccordement à soufflet 16, le garnissage de l'invention, qui est continu, est constitué par deux panneaux de face 76, et quatre soufflets de garnissage 83, un panneau de plafond 75, au droit de la jonction de raccordement à soufflet 16. Les panneaux de face 76 sont des panneaux plans et chaque extrémité droit et gauche des panneaux est reliée, sur toute sa hauteur, par une soufflet de garnissage 83 à un élément de raccordement 104 lui-même fixé à la paroi d'un élément 14, 15, constituant le compartiment d'intercirculation. Le compartiment d'intercirculation relie les caisses de voitures 1 et 2, son pivotement vis-à-vis de ces caisses s'effectuant autour des axes verticaux 4 et 5. Comme représenté figure 1, chaque paroi latérale des éléments 14 et 15 comporte une fenêtre 37, 38 respectivement.

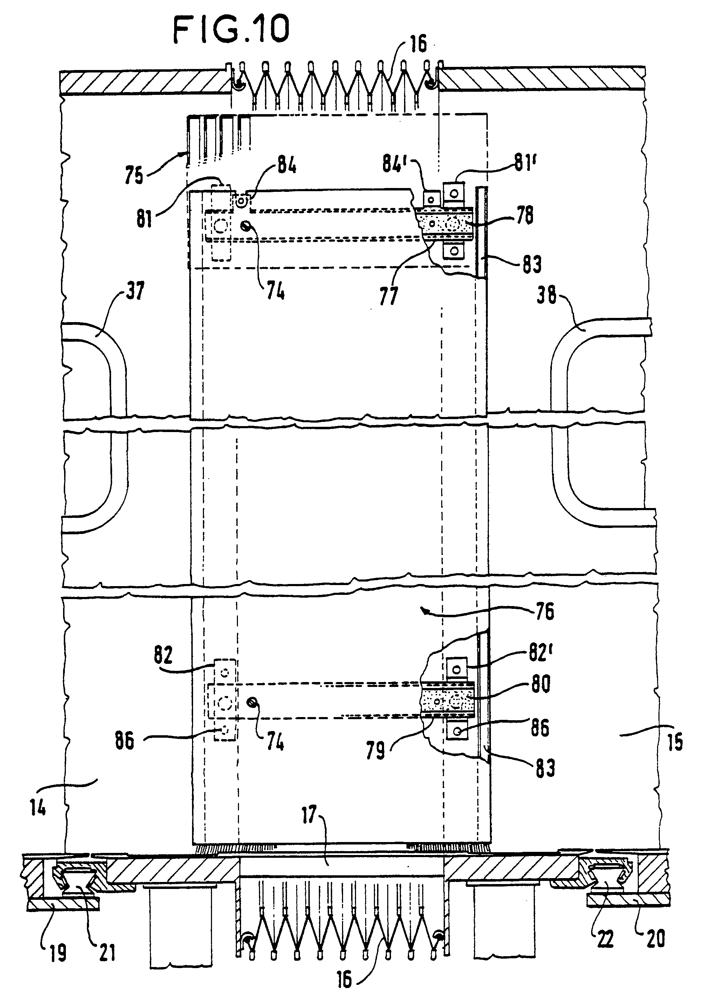

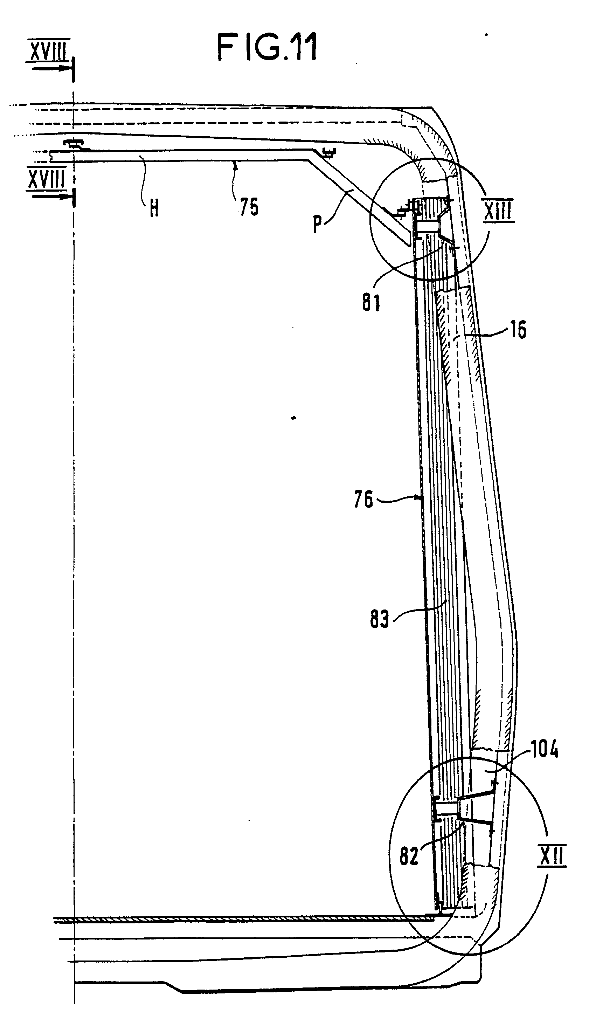

La figure 10 représente en élévation un panneau de face, avec arrachement partiel aux endroits de fixation, et la figure 11 est une vue partielle du garnissage du compartiment d'intercirculation selon la coupe XI-XI de la figure 9. Le panneau de face 76 est fixé rigidement sur deux traverses en U, une traverse supérieure 77 et une traverse inférieure 79, à l'aide de vis 74 ; les vis de fixation sur la traverse supérieure sont masquées par une partie inclinée du panneau de plafond 75. Deux bandes de feutres auto-adhésif 78 et 80 sont interposées respectivement entre le panneau de face 76 et les traverses supérieure 77 et inférieure 79, pour éviter tout contact entre le panneau de face et les traverses. Chaque traverse est fixée élastiquement, à chaque extrémité, à un support solidaire d'un élément du compartiment d'intercirculation ; la traverse supérieure 77 est fixée à deux supports supérieurs 81 et 81' solidaires des éléments 14 et 15 respectivement, et la traverse inférieure 79 est fixée à deux supports inférieurs 82 et 82' solidaires des éléments 14 et 15 respectivement. Chaque panneau de face est relié, à chaque extrémité droite et gauche et sur toute sa hauteur, à un soufflet de garnissage 83 afin de masquer le soufflet 16 et les supports supérieurs et inférieurs lorsque le panneau de face est en place, et assurer la continuité du garnissage avec les éléments 14 et 15.

Dans la figure 9, les repères 6 et 7 désignent des secteurs convexes des caisses 1 et 2 qui coopèrent avec des secteurs concaves 8 et 9 du compartiment d'intercirculation lors des rotations autour des axes 4 et 5 ; les secteurs convexes 6 et 7 comportant des chemins de support 19, 20, figure 10, pour des liaisons à queue d'aronde cintrée 21, 22 ; la référence 17, figure 10, désigne un élément de plancher semi-souple du compartiment d'intercirculation, au droit du soufflet 16.

Comme représenté figure 11, le panneau de plafond 75 comporte une partie horizontale H et deux parties inclinées P et P' venant recouvrir l'extrémité supérieure des panneaux de face (seule la partie P est représentée figure 11). Chaque partie inclinée est fixée élastiquement à deux pattes 84 et 84' de la traverse supérieure 77 (figure 10).

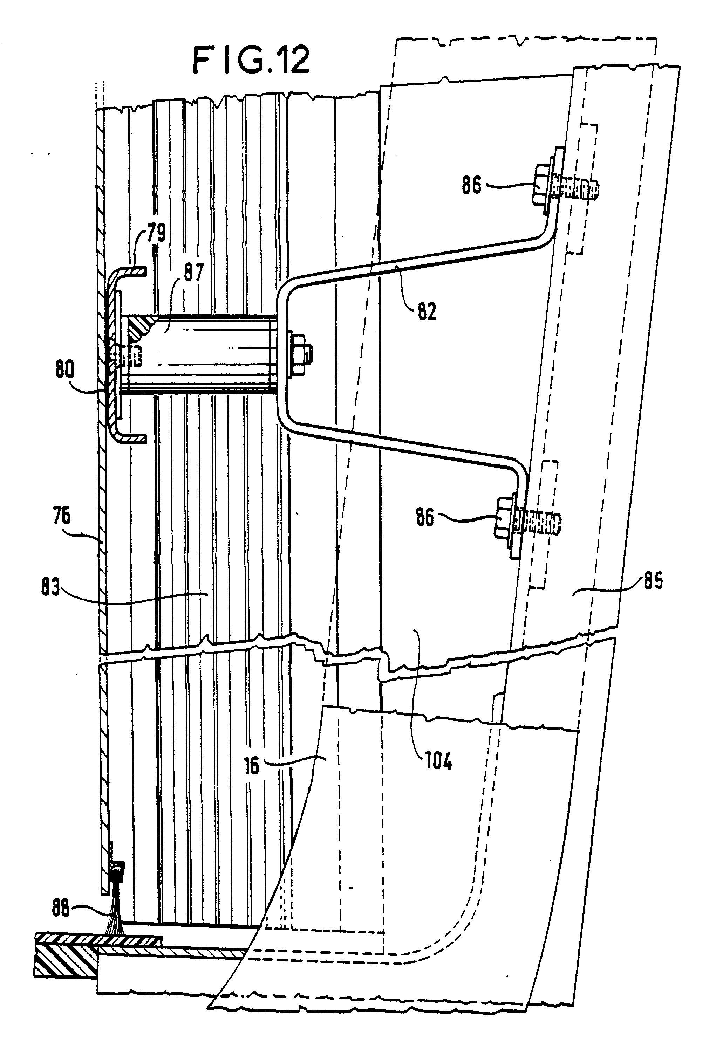

La figure 12 représente le détail XII de la figure 11. Le support inférieur 82 est fixé sur la nacelle 85 de l'élément 15 du compartiment d'intercirculation par deux boulons 86. La traverse inférieure 79 est fixée par l'intermédiaire d'un plot élastique 87 sur le support inférieur 82 ; la bande de feutre auto-adhésif 80 est interposée entre la traverse inférieure 79 et le panneau de face 76 ; celui-ci est soit métallique, en aluminium par exemple, soit en plastique dur. A la partie inférieure du panneau de face, une balayette 88 fixée afin de fermer l'espace ménagé entre le bas du panneau de face et la plancher du compartiment d'intercirculation.

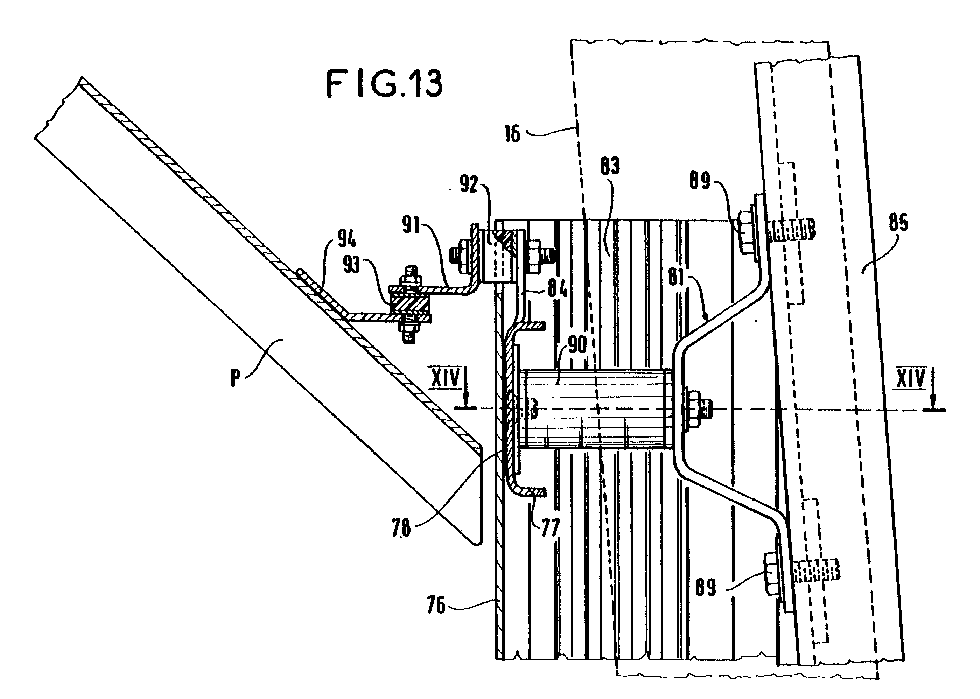

La figure 13 représente le détail XIII de la figure 11. Le support supérieur 81 fixé à la nacelle 85 de l'élément 15 du compartiment d'intercirculation par deux boulons 89. La traverse supérieure 77 est fixée par l'intermédiaire d'un plot élastique 90 sur le support supérieur 81 ; la bande de feutre adhésif 78 est interposée entre la traverse supérieure 77 et le panneau de face 76. Un profilé d'accrochage 91, en forme de L est fixé par l'intermédiaire d'un plot élastique 91 à la patte 84 de la traverse supérieure 77 ; par ailleurs la partie inclinée P du panneau de plafond est fixée élastiquement au profilé d'accrochage 91 par l'intermédiaire de pattes telles que 94 et de plots élastiques tels que 93. L'autre partie inclinée P' du panneau de plafond est bien entendu fixé de manière identique.

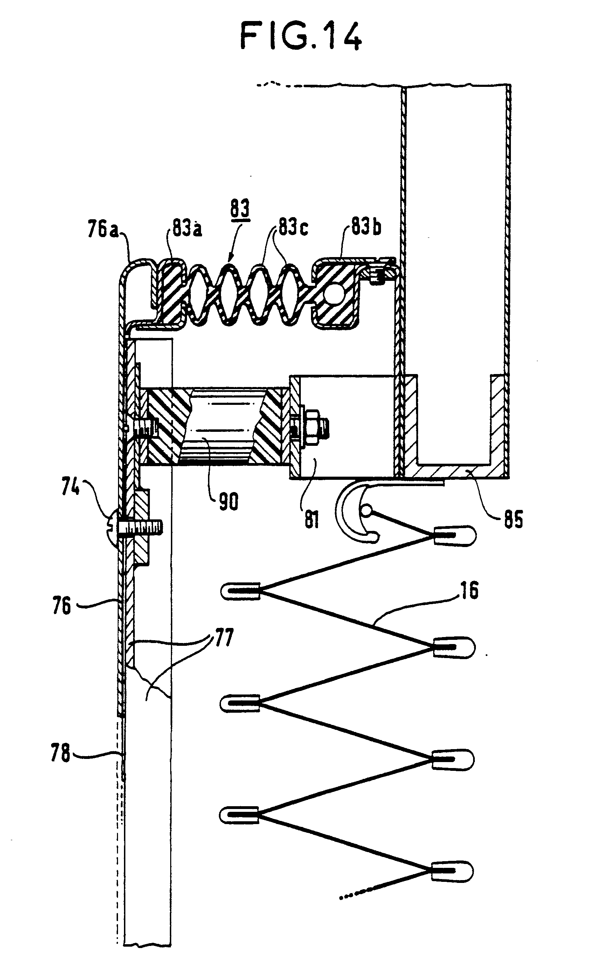

La figure 14 est une coupe partielle selon l'axe XIV-XIV du système de fixation du panneau de face de la figure 13 ; le soufflet de garnissage 83 comporte une première pièce d'extrémité 83a fixée à une extrémité recourbée 76a du panneau de face 76, et une deuxième pièce d'extrémité 83b fixée, en haut du soufflet de garnissage, à la nacelle 85 de l'élément de compartiment et sur la hauteur du soufflet de garnissage à l'élément de raccordement 104. Le soufflet de garnissage est par exemple en caoutchouc et comporte des alvéoles telles que 83c.

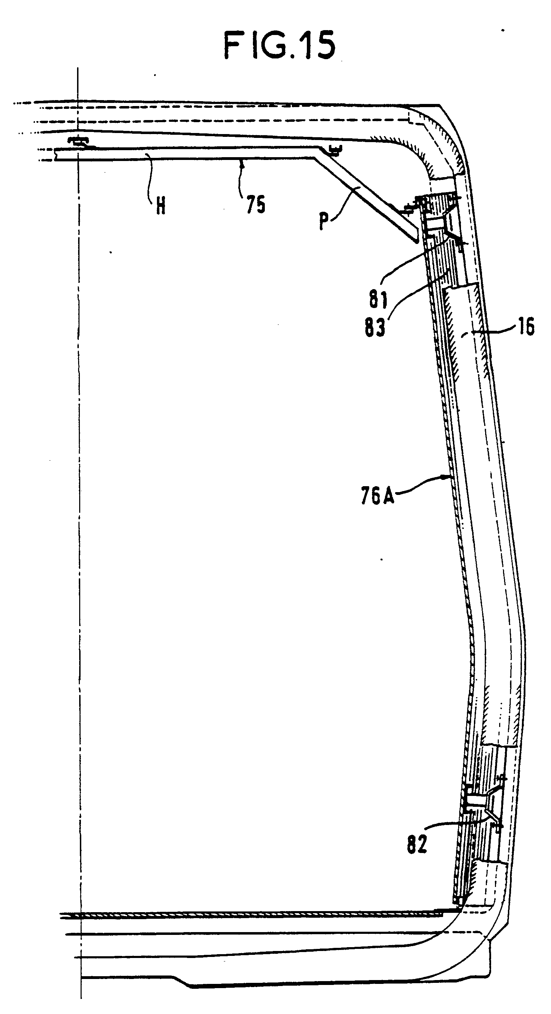

La figure 15 représente une variante du panneau de face 76 dans la même vue en coupe partielle que la figure 11. Dans cette figure 8 le panneau de face 76A est un panneau galbé épousant la forme des éléments 15 et 15 du compartiment d'intercirculation ; l'élément de raccordement 104 (figure 8) n'existe pas et le soufflet de garnissage est fixé par sa deuxième pièce d'extrémité 83b (figure 14) à la nacelle de l'élément de compartiment.

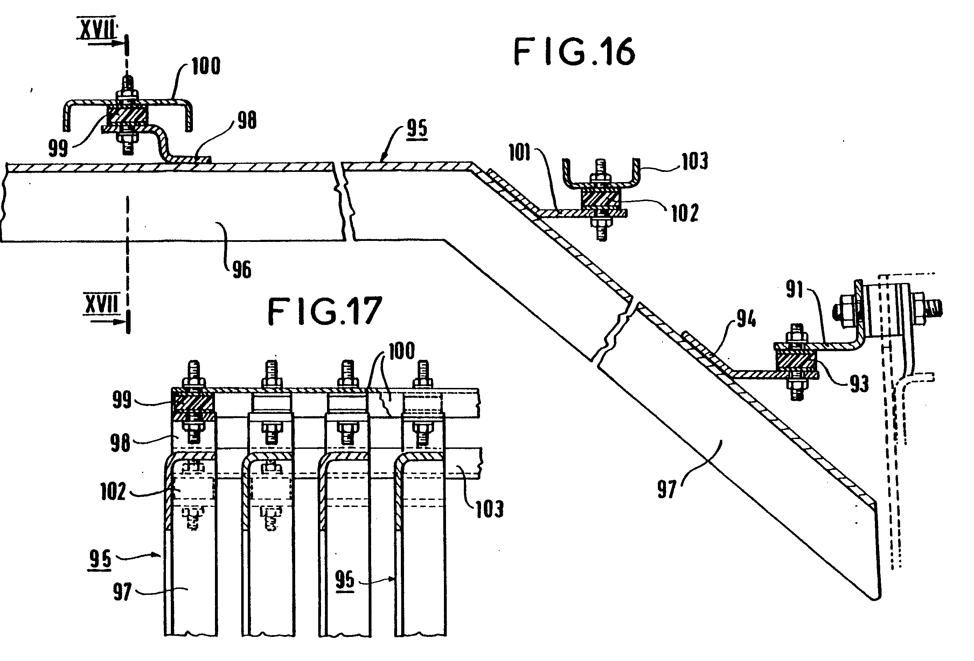

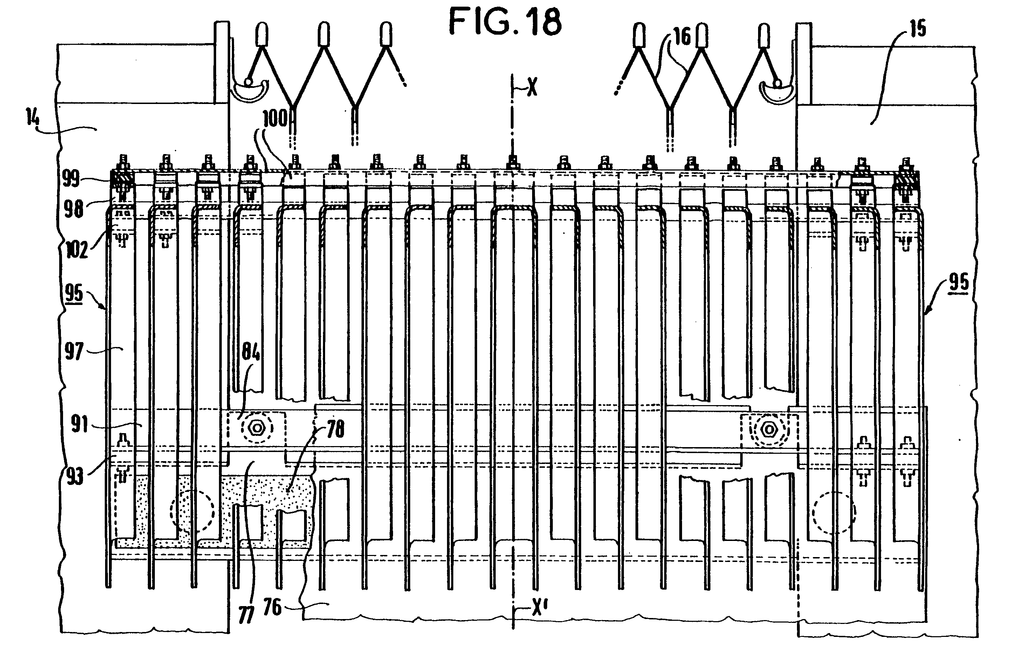

Les figures 16, 17, 18 sont des vues du panneau de plafond 75, la figure 16 représentant à l'échelle agrandie le panneau de plafond de la figure 11, la figure 17 représentant une vue partielle en coupe selon l'axe XVII-XVII de la figure 16, et la figure 18 représentant à une échelle réduite, une vue d'ensemble du plafond selon l'axe de coupe XVIII-XVIII de la figure 16.

Le panneau de plafond 75 est constitué d'arceaux 95, de forme trapézoïdale, réalisés à partir de profilés en L, ces profilés étant métalliques, en aluminium par exemple. Chaque arceau 95 comprend une branche horizontale 96 et deux branches inclinées dont seule la branche inclinée 97 est représentée figure 9. Chaque branche horizontale 96 est fixée élastiquement en son milieu, à l'aide d'une patte 98 et d'un plot élastique 99 à un profilé central 100, en forme de U ; chaque branche inclinée 97 est fixée élastiquement, à l'aide d'une patte 101 et d'un plot élastique 102, a un profilé de côté 103 en forme de U ; chaque branche inclinée 97 est également fixée par une patte 94 et un plot élastique 93 au profilé d'accrochage 91 en forme de L ; l'autre branche inclinée des arceaux est fixée de la même manière sur un autre profilé de côté et un autre profilé d'accrochage. Dans la figure 18 qui est une vue d'ensemble du panneau de plafond selon l'axe de coupe XVIII-XVIII de la figure 16, l'axe XX' qui partage en deux le panneau de plafond selon sa largeur est un axe de symétrie, les arceaux 95, en profilé en forme de L de la demi largeur de droite étant en vis-à-vis des arceaux de la demi largeur de gauche ; au centre du panneau de plafond les deux arceaux sont en contact et l'ensemble constitué par ces deux arceaux équivaut à un arceau unique, ayant une forme de U et de largeur double d'un arceau en forme de L.

Les deux panneaux de face et le panneau de plafond sont gauchissables, c'est-à-dire qu'ils peuvent subir des déformations reversibles lors des mouvements relatifs des éléments constituant le compartiment d'intercirculation, l'amplitude de ces mouvements étant d'ailleurs limitée grâce au dispositif de liaison reliant les éléments entre-eux, et aux voitures. L'emploi de plots élastiques, associé aux déformations des panneaux gauchissables permet d'avoir un garnissage d'aspect rigide alors que le compartiment d'intercirculation est déformable.

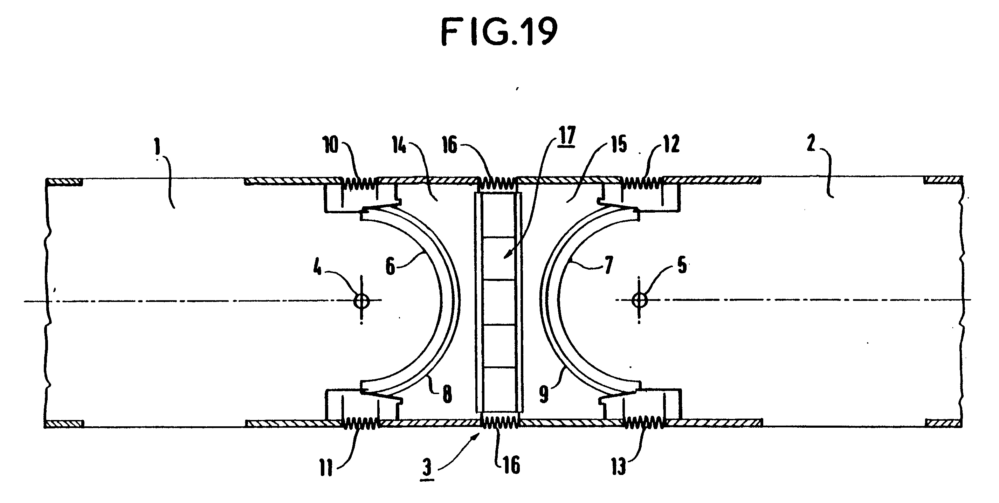

Dans la figure 19, les caisses 1 et 2 des deux voitures sont reliées par le compartiment d'intercirculation 3 composé des éléments 14 et 15.

Le pivotement de ce compartiment vis-à-vis des caisses s'effectue autour des axes verticaux 4 et 5, grâce au glissement des secteurs convexes 6, 7 des extrémités des caisses dans les secteurs concaves 8, 9 des éléments du compartiment d'intercirculation. Les bords de ce dernier sont raccordés aux bords des caisses par des soufflets 10, 11, 12, 13. Les deux éléments d'intercirculation sont accouplés par une jonction à soufflet 16 sur les côtés et le pavillon et par les plaques métalliques formant passerelle 17 au niveau de leurs planchers. Cette passerelle forme un plancher de liaison qui ne présente que des débattements compatibles avec la présence de garnissages des faces latérales verticales des deux éléments d'épaisseur suffisante pour assurer le confort requis.

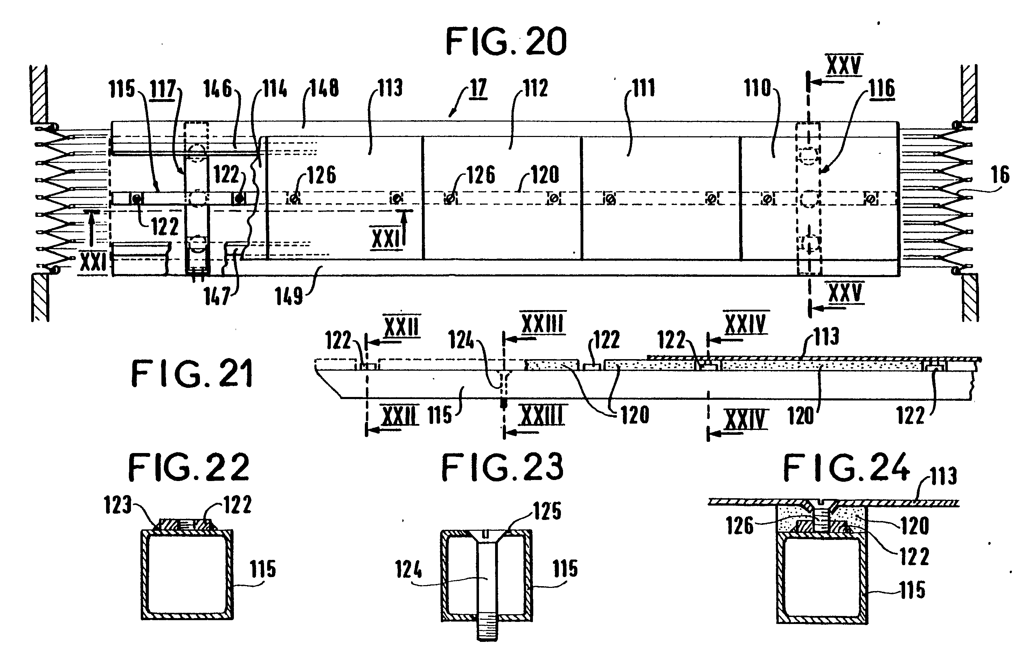

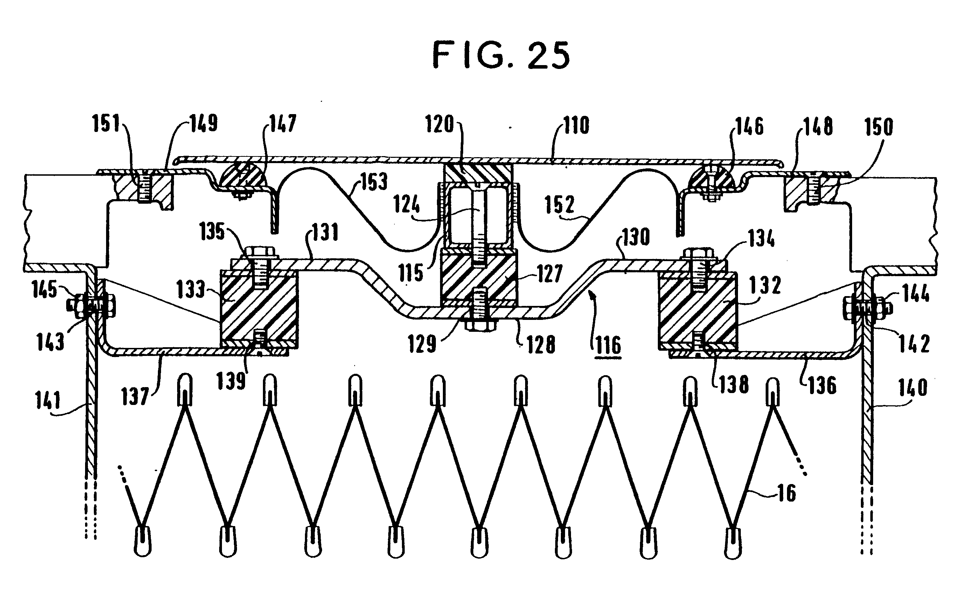

La liaison souple des deux éléments d'intercirculation représentée à plus grande échelle en figure 20 comporte des plaques métalliques rectangulaires 110, 111, 112, 113 et 114 alignées selon un axe perpendiculaire à l'axe longitudinal du dispositif d'intercirculation, à l'intérieur du soufflet 16. Ces plaques sont supportées par la barre transversale 115. Cette barre repose elle-même près de ses deux extrémités, sous les plaques 110 et 114, sur les organes de support représentés schématiquement en 116 et 117, dont la structure sera décrite plus en détail en référence à la figure 25.

La fixation des plaques métalliques à la barre transversale 115 s'effectue grâce à des écrous 122 (fig. 22, 24), soudés sur cette barre par des cordons de soudure 123, dans lesquels sont vissés des vis 126 introduites dans des trous percés dans la plaque métallique. L'intervalle entre la face supérieure de la barre transversale et la plaque métallique est occupé par une bande d'élastomère 120, interrompue aux emplacements des fixations 118.

Le support de la barre 115 à ses extrémités par les organes 116 et 117 s'effectue par l'intermédiaire d'une vis 124 (fig. 23) passant dans un alésage de la face inférieure de la barre et à tête soudée par une soudure 125 dans un orifice de sa face supérieure.

Comme représenté en figure 25, cette vis s'engage dans un plot en élastomère 127 à faces supérieure et inférieure métalliques. Ce plot est lui-même fixé par une vis 129 dans la zone centrale en creux 128 de la traverse 116 à rebords relevés 130 et 131. Les rebords de cette traverse sont fixés sur les plots en élastomère 132 et 133, à faces supérieure et inférieure métalliques, par des vis 134, 135.

Les plots 132, 134 sont supportés par les équerres métalliques 136, 137, sur lesquelles ils sont vissés par des vis 138, 139.

Les équerres 136, 137 sont fixées aux rebords 140, 141 des deux éléments d'intercirculation par boulons 142, 143 et écrous 144, 145.

La plaque métallique 110 est supportée sur ses bords par des patins métalliques hémisphériques 146, 147, eux-mêmes fixés sur les ailes métalliques 148, 149 vissées sur les bords des éléments d'intercirculation par des vis 150, 151.

L'étanchéité à l'humidité et aux poussières entre une plaque métallique telle que 110 et la traverse correspondante 116 est assurée grâce à une toile 152, 143, solidarisée à la barre transversale 115 par un accrochage type "Velcro" et aux ailes métalliques 148, 149 par collage sur un rebord vertical de celle-ci. Cette toile permet également de parfaire l'isolation phonique.

## Revendications

1. Dispositif de liaison entre deux véhicules ferroviaires autorisant des mouvements relatifs de rotation d'axe vertical et d'axe horizontal entre les caisses (1, 2) des véhicules, et définissant un compartiment (3) d'intercirculation d'une caisse à l'autre, comportant deux éléments (14, 15) reliés par une liaison souple, chaque élément s'articulant vis-à-vis de la caisse adjacente autour d'un axe vertical (4, 5) commun avec celle-ci, étant exempt de bogie porteur, et s'articulant avec l'autre élément et avec la caisse correspondante grâce à une rotule (18) en partie haute et à un secteur convexe (6, 7) en extrémité de caisse glissant à l'intérieur d'un secteur concave (8, 9) de l'extrémité de l'élément, caractérisé en ce que l'élément est supporté par le secteur convexe-concave (6, 35 ; 7, 36) en partie basse, se trouvant alors guidé par la rotule en partie haute (18), qui comporte un jeu vertical d'adaptation en hauteur, ou bien est supporté par la rotule en partie haute, dont la position verticale est fixe, se trouvant guidé par le secteur convexe-concave en partie basse.

2. Dispositif selon la revendication 1, caractérisé en ce que le secteur convexe en extrémité de châssis de la caisse et le secteur concave correspondant de l'élément sont reliés par un secteur à queue d'aronde cintrée (42, 42A), à roulement à billes (52B, 52C, 62B, 62C), à rouleaux (72B, 72C, 72D) ou à patins à frottement doux.

3. Dispositif selon les revendication 1 ou 2, caractérisé en ce que les ossatures des éléments sont rigides et dans le prolongement des caisses en alignement.

4. Dispositif selon l'une des revendications 1 à 3, caractérisé en ce que les deux caisses sont accouplées par un coupleur élastique (29) réunissant deux parties d'une barre d'attelage, et assurant une translation dans le plan longitudinal et une rotation dans le plan transversal.

5. Dispositif selon la revendication 1, définissant un compartiment d'intercirculation constitué par deux éléments (14, 15, fig.8) couplés par un soufflet (16), caractérisé en ce que ledit compartiment comporte, au droit du soufflet, un garnissage gauchissable intérieur constitué par deux panneaux de face (76 ; 76'), un sur chaque côté du compartiment, et un panneau de plafond (75) déformable, lesdits panneaux de face et ledit panneau de plafond masquant ledit soufflet et étant fixés de manière élastique à chacun des deux éléments (14, 15) du compartiment.

6. Dispositif de liaison selon la revendication 5, caractérisé en ce que chaque panneau de face (76) est fixé en haut sur une traverse supérieure (77) et en bas sur une traverse inférieure (79) toutes deux en forme de U, à l'aide de vis (74), que la traverse supérieure (77) est fixée à chaque extrémité par un plot élastique (90) à un support supérieur (81 ; 81') solidaire d'un desdits éléments, et que la traverse inférieure (79) est fixée à chaque extrémité par un plot élastique (87) à un support inférieur (82 ; 82') solidaire d'un desdits éléments.

7. Dispositif de liaison selon la revendication 5, caractérisé par le fait que chaque extrémité droite et gauche d'un panneau de face est reliée sur toute sa hauteur à un élément (14 ; 15) du compartiment d'intercirculation par un soufflet de garnissage (83).

8. Dispositif de liaison selon la revendication 5, caractérisé en ce que les panneaux de face sont plans.

9. Dispositif de liaison selon la revendication 5, caractérisé en ce que les panneaux de face sont des panneaux galbés (76A) épousant la forme des éléments (14 ; 15) du compartiment d'intercirculation.

10. Dispositif de liaison selon la revendication 6, caractérisé en ce que la traverse supérieure (77) comporte à chaque extrémité une patte (84 ; 84'), que ledit panneau de plafond (75) est fixé élastiquement par dessus et à proximité de chaque panneau de face (76) par des plots élastiques (93) à un profilé d'accrochage (91 ; 91') en forme de L parallèle à la traverse supérieure (77), et que ledit profilé d'accrochage est fixé en extrémité à chaque patte (84 ; 84') de ladite traverse supérieure par un plot élastique (92).

11. Dispositif de liaison selon la revendication 10, caractérisé en ce que le panneau de plafond (75) est constitué d'arceaux (95) de forme trapézoïdale, chaque arceau étant obtenu à partir d'un profilé en L, que chaque arceau est fixé à chaque profilé d'accrochage (91 ; 91') par un plot élastique (93), et que chaque arceau est fixé en son milieu à un profilé central (100) et de part et d'autre dudit milieu à deux profilés de côté (103) par des plots élastiques (99 ; 102), ledit profilé central et lesdits profilés de côtés ayant chacun une forme de U et étant parallèles auxdits profilés d'accrochage (91).

12. Dispositif selon la revendication 1, caractérisé en ce que la liaison souple des deux éléments d'intercirculation comprend des plaques rectangulaires de tôle métallique (110 à 114) juxtaposées dans le sens transversal à l'axe du dispositif, reposant par l'intermédiaire d'une bande en élastomère (120) sur une barre transversale (115), et en ce que cette barre transversale est supportée sous les plaques de tôle métallique extrêmes (110, 114) par l'intermédiaire de plots en élastomère (127) par une traverse (116), elle-même supportée sur ses bords par des équerres métalliques (130, 137) solidarisées avec les bords des éléments d'intercirculation.

13. Dispositif selon la revendication 12, caractérisé en ce que le support de la traverse sur ses bords par les équerres métalliques est assuré par l'intermédiaire de plots en élastomère (132, 133).

14. Dispositif selon les revendications 12 ou 13, caractérisé en ce que chaque plaque rectangulaire repose sur ses bords adjacents aux bords des éléments d'intercirculation sur des patins (146, 147) fixés à des ailes métalliques (148, 149) solidarisées avec les bords des éléments d'intercirculation.

15. Dispositif selon la revendication 14, caractérisé en ce que la barre transversale est reliée de façcn étanche aux bords adjacents des ailes métalliques par une toile (152, 153).

16. Dispositif selon l'une des revendications 12 à 15, caractérisé en ce que la traverse présente une partie centrale en creux (128) et des rebords relevés (130, 131).

**Claims**

1. A connection device between two railway vehicles enabling relative movement between the bodies (1, 2) of the vehicles in rotation about a vertical axis and about a horizontal axis, and defining a corridor connection compartment (3) between the two bodies, the compartment comprising two portions (14, 15) interconnected by a flexible connection, each portion being hinged to the adjacent body about a vertical axis (4, 5) in common therewith, there being no carrying bogey, and being hinged with the other portion and the corresponding body by means of a high convex pivot (18) and a convex sector (6, 7) at the end of the body sliding inside a concave sector (8, 9) at the end of the portion, the device being characterized in that the portion is supported by the convex-concave sector (6, 35; 7, 36) at the bottom, and is thus guided by the high convex pivot (18) which includes height adapting vertical clearance, or else is supported by the high convex pivot whose vertical position is fixed, and is guided by the low convex-concave sector.

2. A device according to claim 1, characterized in that the convex sector at the end of the chassis of the body and the corresponding concave sector of the portion are interconnected by a sector having a curved dovetail (42, 42A), a ball track (52B, 52C, 62B, 63C), a roller track (72B, 72C, 72D), or smooth friction skids.

3. A device according to claim 1 or 2, characterized in that the frameworks of the portions are rigid and extend the bodies in alignment.

4. A device according to any one of claims 1 to 3, characterized in that the two bodies are coupled together by a resilient coupler (29) interconnecting two portions of a coupling bar and providing translation in the longitudinal plan and rotation in the transverse plane.

5. A device according to claim 1, defining a corridor connection compartment constituted by two portions (14, 15, Figure 8) coupled together by a bellows (16), the device being characterized in that said compartment comprises, level with the bellows, a warpable interior lining constituted by two face panels (76; 76') on each side of the compartment, and a deformable ceiling panel (75), said face panels and ceiling panel masking said bellows and being fixed resiliently to each of the two portions (14, 15) of the compartment.

6. A connection device according to claim 5, characterized in that each face panel (76) is fixed at the top to a top cross-member (77) and at the bottom to the bottom cross-member (79), both cross-members being channel section bars and the fixing being by means of screws (74), in that the top cross-member (77) is fixed at each end by a resilient stud (90) to a top support (81; 81') fixed to one of said portions, and in that the bottom cross-member (79) is fixed at each end by a resilient stud (87) to a bottom support (82; 82') fixed to one of said portions.

7. A connection device according to claim 5, characterized by the fact that each right and left end of a face panel is connected over its entire height to one of the corridor connection portions (14; 15) by means of a lining bellows (83).

8. A connection device according to claim 5, characterized in that the face panels are plane.

9. A connection device according to claim 5, characterized in that the face panels are curved panels (76A) following the shape of the corridor connection compartment portions (14; 15).

10. A connection device according to claim 6, characterized in that the top cross-member (77) includes a tab (84; 84') at each end, in that the said roof panel (75) is fixed resiliently from above and in the vicinity of each face panel (76) by resilient studs (93) to a bracket angle bar (91; 91') running parallel to the top cross-member (77), and in that said bracket bar is fixed at each end to each of the tabs (84; 84') of said top cross-member by means of a resilient stud (92).

11. A connection device according to claim 10, characterized in that the ceiling panel (75) is constituted by arches (95) that are trapezium-shaped, each arch being obtained from an angle bar, each arch being fixed to each bracket bar (91; 91') by a resilient stud (93), and in that each arch is fixed in the middle to a central bar (100) and on either side of said middle to two side bars (103) via resilient studs (99; 102), said central bar and said side bars each being channel section bars and extending parallel to said bracket bars (91).

12. A device according to claim 1, characterized in that the two corridor connection portions are interconnected by rectangular sheet metal plates (110 to 114) that are juxtaposed in the direction transverse to the axis of the device, resting via an elastomer strip (130) on a transverse bar (115), and in that said transverse bar is supported beneath the end sheet metal plates (110, 114) by a cross-bar (116) via resilient studs (127), the cross-bar being supported at its edges by metal brackets (130, 137) fixed to the edges of the corridor connection portions.

13. A device according to claim 12, characterized in that the support of the cross-bar on its edges by the metal brackets is provided by means of elastomer studs (132, 133).

14. A device according to claim 12 or 13, characterized in that each rectangular plate rests via its edges adjacent to the edges of the corridor connection portions on skids (146, 147) fixed to metal webs (148, 149) supported by the edges of the corridor connection portions.

15. A device according to claim 14, characterized in that the transverse bar is connected in waterproof manner to the adjacent edges of the metal webs by a cloth (152, 153).

16. A device according to any one of claims 12 to 15, characterized in that the cross-bar has a hollow central portion (128) and raised rims (130, 131).

**Patentansprüche**

1. Verbindungseinrichtung zwischen zwei Schienenfahrzeugen, welche relative Drehbewegungen zwischen den Waggons (1, 2) der Fahrzeuge um die senkrechte und um die waagrechte Achse erlaubt und einen Raum (3) für den Durchgang von einem Waggon zum anderen ausbildet, wobei der Raum zwei durch eine nachgiebige Verbindung miteinander verbundene Elemente (14, 15) aufweist und jedes Element, das in Bezug auf den benachbarten Waggon um eine mit diesem gemeinsame senkrechte Achse (4, 5) gelenkig gelagert ist, kein tragendes Drehgestell aufweist und mit dem anderen Element und dem entsprechenden Waggon durch ein Gelenk (18) im oberen Teil und einem konvexen Abschnitt (6, 7) am Ende des Waggons, der im Inneren eines konkaven Abschnitts (8, 9) am Ende des Elements gleitet, gelenkig verbunden ist, dadurch gekennzeichnet, daß das Element von einem konvex-konkaven Abschnitt (6, 35; 7, 36) am unteren Teil getragen und somit vom Gelenk (18) im oberen Teil nur geführt wird, das der Höhe nach ein senkrechtes Anpassungsspiel aufweist, oder daß das Element vom Gelenk im oberen Teil getragen wird, dessen senkrechte Position feststeht, und vom konvexkonkaven Abschnitt im unteren Teil nur geführt wird.

2. Einrichtung nach Anspruch 1, dadurch gekennzeichnet, daß der konvexe Abschnitt am Ende des Chassis des Waggons sowie der entsprechenden Abschnitt des Elements durch einen schwalbenschwanzförmigen und gewölbten Abschnitt (42, 42A) oder einen Abschnitt mit Kugellager (52B, 52C, 62B, 62C) oder mit Wälzlagern (72B, 72D, 72D) oder mit weichgleitenden Kufen verbunden sind.

3. Einrichtung nach Anspruch 1 oder 2, dadurch gekennzeichnet, daß die Versteifungen der Elemente steif sind und in der Verlängerung der Waggons fluchtend verlaufen.

4. Einrichtung nach einem der Ansprüche 1 bis 3, dadurch gekennzeichnet, daß die beiden Waggons durch eine elastische Kupplung (29) miteinander verbunden sind, die zwei Teile einer Zugstange vereinigt und eine Verschiebung sowohl in der Längsebene als auch in der Querebene ermöglicht.

5. Einrichtung nach Anspruch 1, die einen Raum für den Durchgang definiert, der aus zwei durch einen Faltenbalg (16) gekuppelten Elementen (14, 15, Figur 8) besteht, dadurch gekennzeichnet, daß der Raum in Höhe des Faltenbalgs eine verwindbare Innenverkleidung bestehend aus zwei Stirnplatten (76, 76'), eine auf jeder Seite des Raums, und aus einer verformbaren Deckenplatte (75) aufweist, wobei die Stirnplatten und die Deckenplatte den Faltenbalg verdecken und elastisch an jedem der beiden Elemente (14, 15) des Raums befestigt sind.

6. Verbindungseinrichtung nach Anspruch 5, dadurch gekennzeichnet, daß jede Stirnplatte (76) oben an einem oberen Querbalken (77) it U-förmigem Profil und unten an einem unteren Querbalken (79) mit U-förmigem Profil mittels Schrauben (74) befestigt ist, daß der obere Querbalken (77) an jedem Ende durch einen elastischen Stollen (90) an einem oberen, fest mit einem der Elemente verbundenen Träger (81, 81') befestigt ist und daß der untere Querbalken (79) an jedem Ende durch einen elastischen Stollen (87) an einem unteren fest mit einem der Elemente verbundene Träger (82, 82') befestigt ist.

7. Verbindungseinrichtung nach Anspruch 5, dadurch gekennzeichnet, daß jedes rechte und linke Ende einer Stirnplatte über seine ganze Höhe durch einen Verkleidungsbalg (83) mit einem Element (14, 15) des Durchgangsraums verbunden ist.

8. Verbindungseinrichtung nach Anspruch 5, dadurch gekennzeichnet, daß die Stirnplatten eben sind.

9. Verbindungseinrichtung nach Anspruch 5, dadurch gekennzeichnet, daß die Stirnplatten konturierte Platten (76A) sind, die sich der Form der Elemente (14, 15) des Durchgangsraums anschmiegen.

10. Verbindungseinrichtung nach Anspruch 6, dadurch gekennzeichnet, daß der obere Querbalken (77) an jedem Ende eine Klaue (84; 84') aufweist, daß die Deckenplatte (75) elastisch von oben und in der Nähe jeder Stirnplatte (76) durch elastische Stollen (93) mit einem Aufhängeprofil (91, 91') in L-Form parallel zum oberen Querbalken (77) befestigt ist, und daß das Aufhängeprofil am Ende an jeder Klaue (84; 84') des oberen Querbalkens durch einen elastischen Stollen (92) befestigt ist.

11. Verbindungseinrichtung nach Anspruch 10, dadurch gekennzeichnet, daß die Deckenplatte (75) aus trapezförmigen Bögen (95) besteht, wobei jeder Bogen aus einem L-förmigen Profilelement gewonnen ist, daß jeder Bogen an jedem Aufhängeprofil (91; 91') durch einen elastischen Stollen (93) befestigt ist, und daß jeder Bogen mittig an einem zentralen Profil (100) und zu beiden Seiten an zwei Seitenprofilen (103) durch elastische Stollen (99; 102) befestigt ist, wobei das zentrale Profil und die Seitenprofile jeweils U-Form besitzen und parallel zu den Aufhängeprofilen (91) verlaufen.

12. Einrichtung nach Anspruch 1, dadurch gekennzeichnet, daß die nachgiebige Verbindung der beiden Durchgangselemente rechteckige Blechplatten (110 bis 114) umfaßt, die in Querrichtung zur Achse der Einrichtung nebeneinanderliegen und über ein Elastomerband (120) auf einem Querbalken (115) ruhen, und daß dieser Querbalken unter den endseitigen Blechplatten (110, 114) mit Hilfe von Elastomerstollen (127) durch einen Querträger abgestützt wird, der seinerseits an seinen Rändern durch Metallwinkel (130, 131) gehalten wird, die mit den Rändern der Durchgangselemente fest verbunden sind.

13. Einrichtung nach Anspruch 12, dadurch gekennzeichnet, daß die Abstützung des Querträgers an seinen Rändern durch die Metallwinkel mit Hilfe von Elastomerstollen (132, 133) geschieht.

14. Einrichtung nach Anspruch 12 oder 13, dadurch gekennzeichnet, daß jede rechteckige Platte mit ihren den Durchgangselementen benachbarten Rändern auf Kufen (146, 147) ruht, die an Metallflügeln (148, 149) befestigt sind, welche fest mit den Rändern der Durchgangselemente verbunden sind.

15. Einrichtung nach Anspruch 14, dadurch gekennzeichnet, daß der Querbalken mit den den Metallflügeln benachbarten Rändern durch ein Tuch (152, 153) dicht verbunden ist.

16. Einrichtung nach einem der Ansprüche 12 bis 15, dadurch gekennzeichnet, daß der Querträger einen muldenförmigen zentralen Abschnitt (128) und hochgezogene Ränder (130, 131) besitzt.

FIG.1

FIG.2

EP 0 279 245 B1

# FIG. 3

# FIG. 4

42A

42

# FIG. 5

52B

52A

52

52C

# FIG. 6

62A

62B

62C

62

# FIG. 7

72A

72C

72B

72D

72

# FIG.8

# FIG.9

EP 0 279 245 B1

# FIG.10

# FIG.11

# FIG.12

FIG.13

EP 0 279 245 B1

# FIG.14

# FIG.15

FIG.16

FIG.17

EP 0 279 245 B1

FIG.18

EP 0 279 245 B1

# FIG.19

EP 0 279 245 B1

FIG. 20

FIG. 21

FIG. 22

FIG. 23

FIG. 24

EP 0 279 245 B1

# FIG. 25

EP 0 279 245 B1